# EUROPEAN PATENT SPECIFICATION

(11) **EP 3 883 381 B1**
(45) Date of publication and mention of the grant of the patent: **19.06.2024**
(21) Application number: 19838943.9
(22) Date of filing: 19.11.2019
(51) Int. Cl.: A01N 31/02, A01P 7/02, A01P 7/04

(54) **USE OF POLYETHYLENE GLYCOL FOR THE CONTROL OF PLANT-DAMAGING INSECTS AND ACARI**
VERWENDUNG VON POLYETHYLENGLYCOL ZUR BEKÄMPFUNG VON PFLANZENSCHÄDIGENDEN INSEKTEN UND MILBEN
UTILISATION DE POLYÉTHYLÈNE GLYCOL POUR LA LUTTE CONTRE LES INSECTES ET LES ACARI ENDOMMAGANT LES PLANTES

(30) Priority: 20.11.2018 IT 201800010454
(43) Date of publication of application: 29.09.2021
(73) Proprietor: 12STEPS ITALIA S.r.l., 20122 Milano (IT)
(72) Inventor: MIGLIO, Giovanni, 40051 Malalbergo (Bologna) (IT)
(74) Representative: Rigamonti, Dorotea
(86) International application number: PCT/IB2019/059929
(87) International publication number: WO 2020/104939

(56) References cited:
- EP-A1- 1 688 038
- .: "PEG 35000 Safety Data Sheet", , 3 August 2015 (2015-08-03), pages 1-6, XP055580465, Dallas, TX, U.S.A. Retrieved from the Internet: URL:https://datasheets.scbt.com/sds/aghs/e n/sc-362506.pdf [retrieved on 2019-04-12]
- Neelma Munir: "The role of polyethylene glycol (PEG) pretreatment in improving sugarcane's salt (NaCl) tolerance", Turkish Journal of Botany, 1 January 2009 (2009-01-01), pages 407-415, XP55592776, DOI: 10.3906/bot-0806-6 Retrieved from the Internet: URL:https://dergipark.org.tr/download/arti cle-file/122457
- DATABASE WPI Week 201879 Thomson Scientific, London, GB; AN 2018-78105F XP002790558, & CN 108 552 215 A (UNIV QINGDAO AGRIC) 21 September 2018 (2018-09-21)

## Description

The invention relates to the use of aqueous compositions comprising polyethylene glycol as the only active ingredient for controlling the infestation by and/or spread of phytophagous insects and/or mites on plants.

### Field Of The Invention

The present invention relates to the use of aqueous compositions comprising polyethylene glycols as the only active ingredient for controlling the infestation by and/or spread of phytophagous insects and/or mites on plants.

### Prior Art

Plants, be they spontaneous or cultivated, are subject to a series of adversities of both an environmental and biotic nature which are capable of greatly limiting their productive potential.

Limiting ourselves to the biotic causes, the latter, very briefly, can be divided into four large categories, namely, weeds, phytopathogenic fungi, other types of pathogenic microorganisms (e.g. viruses, bacteria, phytoplasmas) and, finally, phytophages, i.e. pluricellular organisms capable of feeding on plants to the detriment thereof. Among the latter, arthropods (insects and mites) are by far the most widespread and harmful category.

It has been estimated that globally there exist over 10,000 species of insects capable of damaging cultivated plants. The average damage produced by such harmful organisms was estimated as 13.6 % of world agricultural production for the three-year period 1988-1990, with peaks of 20.7% for soybean, 16.1 % for potatoes, 15.4% for cotton and 14.5% for maize (Dhalival et al., Indian Journal of Entomology 77(22) 165-168). In the three-year period 2001 -2003 the above-mentioned average value rose to 18% (Oerke et al., Cambridge University Press, 2005 (144) 31 -43).

The situation appears to be constantly and progressively worsening, also due to the climate changes underway. In this regard, it has been estimated that a two degree Celsius rise in temperatures may bring about an increase of the damage caused by insects to 31 % for maize, 19% for rice and 46% for wheat (Deutsch et al., cited in "La Repubblica" 30 August 2018).

At present state of the art, the fight against insects and mites harmful to both spontaneous and cultivated plants is conducted with physical means (e.g. protective barriers, heat), biological means (organisms capable of parasitising or preying on phytophages), and chemical means, i.e. insecticides and acaricides.

The first two groups of methods, being by definition non-chemical, have the undeniable advantage of not leaving residues of polluting chemical substances either on foodstuffs or in the environment. The disadvantage, equally undeniable, is due to the difficulty of implementing many physical means and the intrinsic fragility of useful organisms and microorganisms. All this translates into an insufficient effectiveness, and thus in a very large majority of cases, the physical or biological means adopted proves to be less effective than the corresponding standard chemical means (insecticide or acaricide) in controlling a given insect or mite species.

Therefore, the use of chemical insecticides and acaricides appears destined to constitute the backbone of defensive strategies against phytophagous insects and mites on a global level also in the future.

Despite their usefulness and indispensability, chemical insecticides and acaricides are not devoid of drawbacks, sometimes extremely serious ones.

In most cases an insecticide or acaricide consists of one or more active substances, i.e. substances responsible for the declared action of the chemical product, as well as, optionally, one or more non-active substances that are used as excipients to modify the physical properties of the finished product, such as density, viscosity, colour, odour etc. The latter substances are thus to be considered accessory, as they are devoid of effects on the metabolism of the target organisms and normally wholly ineffective if used on their own. A first serious drawback of the active substances used in insecticides and acaricides is tied to the toxicity they exhibit towards non-target organisms, including in many cases mammals and humans.

An equally serious and unresolved drawback is that chemical substances with an insecticidal and/or acaricidal activity by definition leave chemical residues, either in the form of substances as such, or their metabolites, which are destined to pollute foodstuffs, the plants themselves and the environment in a broad sense to a varying degree. In order to limit this problem, many old active substances with a neurotoxic action or action through contact have been replaced with others of a newer conception, having a more specific mechanism of action and targeting precise metabolic sites of the target organisms.

A further serious drawback derives from the fact that insecticides and/or acaricides with a specific mechanism of action tend to lose effectiveness if the attack site is modified, either due to a mutation or another genetic variation in the target populations. The very widespread phenomena of "tolerance" among insects and mites to the modern active ingredients used against them derive from this principle and result in a serious loss of resources in terms of the available agricultural treatments.

Yet a further drawback is due to the fact that, in all industrialised countries, the costs of developing and registering new active substances with a plant protection action have reached extremely high levels, which in the European Union can be estimated as around 20-50 million Euros, while it takes around ten years or more to develop and register new plant protection products. This situation has resulted in a progressive decrease in the number of active chemical substances that can be used to defend against phytophagous insects and mites, and the increase in the damage produced by the latter on plants on a global level may be partly attributed to this.

As an emblematic example of the foregoing, we can mention the case of so-called scale insects. On a global level, scale insects represent one of the most widespread and dangerous causes of crop damage. These insects attack practically all species of cultivated trees and many species of shrubs, causing severe damage to the edible parts and often the decay and even death of the plants themselves.

For over half a century, from the early 1950s to the first decade of the present century, the control of these insects worldwide was based on applying on the plants insecticides with a neurotoxic action, prevalently belonging to the chemical families of the organophosphorates and carbamates, and/or mineral oils with a function of reinforcing the action of insecticides when used together with them.

However, the serious toxicological problems and pollution caused by the aforesaid insecticides have led to them being banned or to their use being severely restricted in all industrialised countries. In the case of Italy, for example, out of around 38 organophosphorus insecticides lawfully usable in 1997, only five were authorised in 2018 and it is believed that one of these in particular, namely, chlorpyrifos, used especially in the fight against scale insects, will shortly be banned in Europe (sources: M. Muccinelli, Prontuario dei fitofarmaci, eighth edition, pp 214-266 and plant protection product database of the Italian Ministry of Health).

The situation with respect to mineral oils is no different. In this case, out of 16 different mineral oils with a different CAS number that could be used in 2010, only 5 are presently available (source: database of the Italian Ministry of Health) and it is believed that the number of the latter as well will be drastically reduced in the near future. EP1688038 discloses the use of polyethylene glycol with a molecular weight of 35.000 Da as insecticide.

CN108552215 discloses a pesticide formulation, wherein polyethylene glycol is comprised as a stabiliser for the active ingredients.

In this context, the object of the present invention is to provide new substances with an insecticidal and/or acaricidal action with limited negative effects on non-target animals and on the environment in a broad sense, and which do not leave residues of chemical substances considered to be harmful for the environment and for humans on plants, on foodstuffs or in the environment.

A further object of the present invention is to provide new insecticidal and/or acaricidal substances endowed with a physical mechanism of action or in any case one involving a number of attack sites on the target organism, so as to limit the risks of the appearance of resistance phenomena as much as possible.

Yet another object of the present invention is to provide insecticidal and/or acaricidal substances which can benefit from a simplified procedure of registration for the placement thereof on the market, in particular in the territory of the European Union.

### Summary Of The Invention

The present invention relates to the use of an aqueous composition comprising 0.01 - 5 vol.% of at least one polyethylene glycol with a molecular weight of 300-20000 Da as an active ingredient for controlling the infestation by and/or spread of phytophagous insects and/or mites on plants.

### Detailed Description Of The Invention

In the context of the present invention, ambient temperature refers to the air temperature in the place where the use according to the invention occurs. It is typically comprised between about 4° and about 40°C.

The present invention relates to the use of an aqueous composition comprising about 0.01 -5 vol.%, preferably about 0.01 -2 vol.%, more preferably about 0.02-1 vol.%, of at least one polyethylene glycol with a molecular weight of about 300-20.000 Da as an active ingredient for controlling the infestation by and/or spread of phytophagous insects and/or mites on plants.

Polyethylene glycol (or PEG) is a polymer of ethylene oxide having the general formula

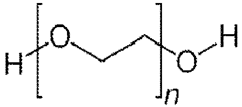

Depending on the number n of monomeric units, the molecular weight of polyethylene glycol can range between a few hundred Daltons, in which case it appears as a fluid, colourless liquid, to several hundred Daltons, in which case it takes on the appearance of a more or less viscous liquid, whose colour varies from transparent to amber. In the case of molecular weights equal to or greater than 1000 Daltons, polyethylene glycols at room temperature are in solid form with a waxy appearance and highly soluble in water.

Irrespective of the molecular weight, polyethylene glycols are considered inert substances from a chemical standpoint, thus with low reactivity and nontoxic; for this reason they are used in various sectors.

PEGs with a low molecular weight (approx. 300-400 Da) are frequently used as inert excipients for drugs intended for intramuscular injection, whereas those with a greater molecular weight, in the order of several thousand Daltons, constitute the basis for the preparation of common drugs taken orally. Finally, PEGs with an even greater molecular weight and high density are used as thickeners for syrups, coatings for tablets and additives in the food industry.

PEGs are also used in numerous industrial formulations of plant protection products, including insecticides and acaricides. However, their function in such products is exclusively that of thickening, plasticising and/or tackifying excipients, since the action of polyethylene glycols as active ingredients capable of controlling the spread of phytophagous insects and/or mites is not known.

The present invention preferably relates to the use of an aqueous composition as described above, wherein the at least one polyethylene glycol is the only active ingredient with an insecticidal and/or acaricidal action comprised in the composition; the at least one polyethylene glycol is preferably the only biocidal active ingredient comprised in the composition. The polyethylene glycols for use according to the present invention preferably have a molecular weight of about 300-8000 Da. In one embodiment, the invention relates to the use of an aqueous composition comprising a mixture of polyethylene glycols having a different mean molecular weight Mn.

The aqueous composition for use according to the invention can preferably be an aqueous solution.

The aqueous composition for the use according to the present invention can further comprise at least one additive selected from the group consisting of colourants, olfactory tracers, plasticisers, tackifier agents, wash-off reducing agents, anti-fermentation agents, surfactants, solar radiation filtering agents and mixtures thereof, of the type normally used in the sector for the preparation of plant protection products, with the condition that said at least one additive is not the at least one polyethylene glycol as described above. The aqueous composition can preferably comprise about 0.001 -0.1 vol.% of at least one additive as described above.

In one embodiment, the aqueous composition for use according to the present invention can comprise at least one additive selected from the group consisting of triacetin, triethyl citrate, shellac and mixtures thereof, preferably in an amount of about 0.001 -0.1 vol.%.

In one embodiment, the aqueous composition for use according to the present invention can consist of 0.01 -5 vol.% of at least one polyethylene glycol as described above, 0.001 -0.1 vol.% of at least one additive as described above and water to 100 vol.%.

Water with any degree of purity can be used to prepare the aqueous composition, including mains water and the water normally used for the irrigation of cultivated land. The polyethylene glycol and optionally the at least one further additive can be added to the water at the standard ambient temperature and pressure, under stirring, using equipment already known per se in the prior art and thus not further described herein. Moreover, said aqueous composition can be placed on the market in a ready-to-use form, i.e. in a form in which the at least one polyethylene glycol and, optionally, the at least one additive have a concentration as specified above. Alternatively, and preferably, the aqueous composition can be placed on the market in a concentrated form, in order to be diluted appropriately at the time of use.

According to the present invention, the aqueous composition comprising at least one polyethylene glycol and, optionally, at least one additive can be used to control the infestation and/or spread of phytophagous insects and/or mites by spraying or depositing the above-described aqueous composition on the aerial part of the plants in an amount comprised between about 30 and about 5,000 l/ha, preferably between about 50 and about 3,000 l/ha.

The above-described aqueous composition can be used in the treatment of open-field crops or greenhouse plants.

The plants can be trees, shrubs, herbaceous plants, vegetable crops or ornamental plants, spontaneous or cultivated. The plants can preferably be trees or shrubs, grown in an open field or else in a greenhouse. The aerial part of the plants can be selected from among the trunk, branches, leaves, buds, flowers or fruits.

Advantageously, depending on the severity of the infestation, and in consideration of the low level of hazardousness of the active ingredient for humans and the environment, the use according to the present invention can be repeated whenever necessary throughout the vegetative life of the plants and/or during the phase of vegetative rest thereof.

The aqueous composition can preferably be sprayed or deposited on the aerial part of the plants in cycles comprising about 1 -10 consecutive treatments, preferably 1 -5, at an interval of about 3-21 days, preferably about 3-10 days, between consecutive treatments.

The aqueous composition can be sprayed or deposited on the aerial part of the plants using the equipment normally employed in the agricultural sector for localised treatment with active ingredients, such as, for example, atomisers, motor-driven pumps, shoulder pumps, aerial distribution means, etc.

The Applicant has surprisingly found that the aqueous composition comprising at least one polyethylene glycol as an active ingredient can be advantageously used to control the infestation by and/or spread of phytophagous insects belonging to at least one order selected in the group consisting of Rhyncota, Lepidoptera and Coleoptera. The aqueous composition preferably comprising at least one polyethylene glycol as an active ingredient, and optionally at least one additive, can be advantageously used to control the infestation by and/or spread of phytophagous insects belonging to at least one family or superfamily selected in the group consisting of Aphidoidea, Coccoidea, Aleyrodidae, Psylloidea, Tortricidae and Chrysomelidae.

In particular, the aqueous composition comprising at least one polyethylene glycol as an active ingredient, and optionally at least one additive, has demonstrated to be able to control the infestation by and/or spread of phytophagous insects belonging to at least one species selected in the group consisting of the scale insect Aonidiella aurantii, Aphis gossypii, Trialeurodes vaporariorum, Cydia pomonella and Leptinotarsa decemlineata.

The latter, in addition to being phytophagous insects of major economic interest given their impact on the growth of cultivated plants, are considered representative of the groups and subgroups to which they belong.

The Applicant has also found that the aqueous composition comprising at least one polyethylene glycol as an active ingredient, and optionally at least one additive, can be advantageously used to control the infestation by and/or spread of phytophagous mites belonging to the family Tetranychidae, preferably to the species Tetranychus urticae. In a further aspect thereof, the present invention relates to a method for controlling the infestation and/or spread of phytophagous insects and/or mites comprising at least
(0) optionally, diluting a concentrated mixture comprising an amount greater than 5 vol.% of at least one polyethylene glycol as described above; and
(i) spraying or depositing on the aerial part of at least one plant 30-5,000 l/ha, preferably 50-3,000 l/ha, of an aqueous composition as described above.

Some mixtures that may be used to carry out step (0) are described in the non-limiting examples in the experimental part. The use of a composition comprising at least one polyethylene glycol as an active ingredient, in particular as the only active ingredient, enables the infestation by and/or spread of phytophagous insects and/or mites on plants to be effectively combated. Said use can take place in a simple manner using equipment normally employed in the sector, and has a low impact both on humans and the environment.

Moreover, since the mechanism of action whereby polyethylene glycols act in limiting or reducing the spread of phytophagous insects and/or mites is of a purely physical type, the likelihood of the onset of resistance by the target insects and/or mites is reduced to a minimum.

Finally, since their use as ingredients of pharmaceutical and/or food products is approved at the European level, the procedure for registering the active ingredient as a plant protection product in accordance with European Regulation EU1 107/2009 will be simplified and not costly.

The examples that follow have an illustrative character, and do not limit the subject matter of the present invention.

### Example 1 and comparative examples 2 and 3

200 ml of a mixture containing:
PEG300: 30g
PEG1000: 100g PEG2000: 100g
PEG4000: 300g and
water q.s. to 1000g
were diluted in 100 litres of irrigation water. The aqueous composition was sprayed in an amount equal to 1 ,000 l/ha with a motor-driver pump for agricultural treatments on adult clementine trees with hanging fruits, infested by the scale insect Aonidiella aurantii (Maskell) on 12 and 30 July. On the same dates and in the same amounts per unit of treated surface area, the following were applied:
   - a reference test plot with mineral oil dispersed in water at a concentration of 200ml per 100 litres of water (Comparative example COMP2); and - a reference test plot consisting of an emulsion obtained by mixing 250 ml of the active ingredient chlorpyrifos and 200ml of mineral oil in 100 litres of irrigation water (Comparative example COMP3).

Pure irrigation water was used as a negative control (CTR(-)).

The survey was conducted on 21 September.

The results are shown in table 1. In table 1 and in the tables that follow, the figures given in the same column and followed by the same letters do not differ statistically from each other for P<0.05.

**Table 1**

| | | | % effectiveness given CTR(-)=0 | |
|---|---|---|---|---|
| | % of affected fruits | no. of insects/fruit | on % of affected fruits | on no. of insects/fruit |
| **Example 1** | 45b | 2.28_{b} | 41.6 | 75.3 |
| **COMP2** | 60a | 4.14ab | 22.1 | 54.9 |
| **COMP3** | 33b | 1.15_{b} | 57.1 | 87.5 |
| **CTR(-)** | 77a | 9.19a | - | - |

Stereomicroscopic observation of the dead insects in the test plot treated with PEG showed evident signs of dehydration of the insect, with cuticle rupture. This suggests a physical mechanism of action due to contact with the active ingredient.

### Example 4

Greenhouse tomato plants infested by Aphis gossypii (Glover) were sprayed five times at weekly intervals with the aqueous composition of example 1 in an amount equal to 800 l/ha.

Pure irrigation water was used as a negative control (CTR(-)).

A count was taken of the insects on the leaves at T3 (immediately before the third treatment) and at T5+7 (seven days after the last treatment). The results are shown in table 2.

**Table 2**

| | no. of live insects/leaf | | % effectiveness given CTR(-)=0 | |
|---|---|---|---|---|
| | T3 | T5+7 | T3 | T5+7 |
| **Example 4** | 1.9_{b} | 2.3b | 52.5 | 59.6 |
| **CTR(-)** | 4.0a | 5.7a | - | - |

### Example 5

Leaves of cabbages infested by juvenile forms of T. vaporariorum of varying age, in a number of 10 leaves per test plot, were collected and sprayed in a semi-field trial with an aqueous solution containing a 5% volume of an equimolar mixture (0.5 moles) of PEG2000 and PEG10000. The amount of composition sprayed was about 1,500 l/ha. Pure irrigation water was used as a negative control (CTR(-)).

Six days after spraying, the juvenile forms still alive were counted with a stereomicroscope. The emerging pupae transformed into adults were counted among the live insects.

**Table 3**

| | no. of live insects/leaf | % effectiveness given CTR(-)=0 |
|---|---|---|
| **Example 5** | 14.6_{b} | 47.8 |
| **CTR(-)** | 28.6a | - |

### Example 6

Young apple trees infested by Cydia pomonella underwent spraying with 1 ,000 l/ha of an aqueous composition obtained by diluting 250g of a mixture containing PEG1000 0.25N and PEG2000 0.125N in 100 litres of irrigation water.

The aqueous composition was applied three times, with the successive applications being spaced four days apart, during the period of adult emergence and egg laying of the second generation of the insect, during the first ten days of June.

Pure irrigation water was used as a negative control (CTR(-)).

Seven days after the last treatment, the apple trees were protected with mesh screens to prevent possible re-infestations by adult insects. An assessment of effectiveness was made by counting the fruits damaged by C. pomonella 30 days after the last treatment. The results are shown in table 4.

**Table 4**

| | % of fruits damaged | % effectiveness given CTR(-)=0 |
|---|---|---|
| **Example 6** | 0.45b | 79.5 |
| **CTR(-)** | 2.20a | - |

### Example 7

Potato leaves covered with eggs of Leptinotarsa decemlineata, in a number of 20 leaves per test plot, were collected and subjected to spraying under semi-field conditions with 1 ,000 l/ha of an aqueous composition obtained by diluting 5,000g of a 0.5M mixture of PEG1000 in 100 litres of irrigation water.

Five days after spraying a count was taken of the live and dead eggs using a stereomicroscope. The eggs with a normal exit hole for the insect were counted as live.

Pure irrigation water was used as a negative control (CTR(-)).

The results of the count are shown in Table 5.

**Table 5**

| | % of live eggs | % effectiveness given CTR(-)=0 |
|---|---|---|
| **Example 7** | 12.5_{b} | 85.4 |
| **CTR(-)** | 86.0a | - |

### Example 8

Live bean plants infested by the phytophagous mite Tetranychus urticae were treated three times over a 10-day period with 1 ,500 l/ha of an aqueous composition obtained by mixing 500g of a 0.25M aqueous solution of PEG2000 in 100 litres of water.

After 10 days of treatment, 50 leaves were collected from each test plot; the mobile forms of the mite were evaluated by counting the imprints obtained by squashing the leaves on absorbent paper. A count of the number of live eggs per leaf was performed on samples of 10 leaves per test plot, using a stereomicroscope.

Pure irrigation water was used as a negative control (CTR(-)).

The results of the evaluations are shown in table 6.

**Table 6**

| | | | % effectiveness given CTR(-)=0 | |
|---|---|---|---|---|
| | no. of mites/leaf | live eggs/leaf | on no. of mites | on no. of live eggs |
| **Example 8** | 3.3_{b} | 8.0_{b} | 62.1 | 63.6 |
| **CTR(-)** | 8.7a | 22.0a | - | - |

## Claims

1. Use of an aqueous composition comprising 0.01 -5 vol.%, preferably 0.01 -2 vol.%, more preferably 0.02-1 vol.%, of at least one polyethylene glycol with a molecular weight of 300-20000 Da, preferably of 300-8000 Da, wherein said at least one polyethylene glycol is used as an insecticidal and/or acaricidal active ingredient, for controlling the infestation by and/or the spread of phytophagous insects and/or mites on plants.

2. The use according to claim 1 , wherein the at least one polyethylene glycol is the only active ingredient with an insecticidal and/or acaricidal action comprised in the composition, preferably the at least one polyethylene glycol is the only active biocidal ingredient comprised in the composition.

3. The use according to any one of the preceding claims, wherein the aqueous composition further comprises at least one additive selected from the group consisting of colourants, olfactory tracers, plasticisers, tackifier agents, wash-off reducing agents, anti-fermentation agents, surfactants, solar radiation filtering agents and mixtures thereof.

4. The use according to any one of the preceding claims, wherein the aqueous composition comprises at least one additive selected from the group consisting of triacetin, triethyl citrate, shellac and mixtures thereof.

5. The use according to any one of the preceding claims, wherein the aqueous composition is sprayed or deposited on the aerial part of the plants in an amount comprised between 30 and 5,000 l/ha, preferably between 50 and 3,000 l/ha.

6. The use according to claim 5, wherein the aqueous composition is sprayed or deposited on the aerial part of the plants in cycles comprising about 1-10 consecutive treatments, preferably 1-5, with an interval of about 3-21 days, preferably about 3-10 days, between consecutive treatments.

7. The use according to any one of the preceding claims, wherein the phytophagous insects belong to at least one order selected in the group consisting of Rhyncota, Lepidoptera and Coleoptera.

8. The use according to any one of the preceding claims, wherein the phytophagous insects belong to at least one family or superfamily selected in the group consisting of Aphidoidea, Coccoidea, Aleyrodidae, Psylloidea, Tortricidae and Chrysomelidae.

9. The use according to any one of the preceding claims, wherein the phytophagous mites belong to the family of the Tetranychidae, preferably the species Tetranychus urticae.

10. A method for controlling the infestation by and/or the spread of phytophagous insects and/or mites comprising:
(0) optionally, diluting a concentrated mixture comprising an amount greater than 5 vol.% of at least one polyethylene glycol as described in claim 1 or 2; and
(i) spraying or depositing on the aerial part of at least one plant 30- 5,000 l/ha, preferably 50-3,000 l/ha, of an aqueous composition as described in any one of claims 1 -4, wherein said at least one polyethylene glycol comprised in said composition is the active ingredient for controlling the infestation by and/or the spread of phytophagous insects and/or mites on plants.

## Patentansprüche

1. Verwendung einer wässrigen Zusammensetzung, die 0,01-5 Vol.-%, vorzugsweise 0,01-2 Vol.-%, besonders bevorzugt 0,02-1 Vol.-%, mindestens eines Polyethylenglykols mit einem Molekulargewicht von 300-20.000 Da, vorzugsweise 300-8.000 Da, umfasst, wobei das mindestens eine Polyethylenglykol als insektizider und/oder akarizider Wirkstoff verwendet wird, zur Kontrolle des Befalls durch, und/oder der Ausbreitung von phytophagen Insekten und/oder Milben auf Pflanzen.

2. Verwendung nach Anspruch 1, wobei das mindestens eine Polyethylenglykol der einzige in der Zusammensetzung enthaltene Wirkstoff mit insektizider und/oder akarizider Wirkung ist, und vorzugsweise das mindestens eine Polyethylenglykol der einzige in der Zusammensetzung enthaltene biozide Wirkstoff ist.

3. Verwendung nach einem der vorhergehenden Ansprüche, wobei die wässrige Zusammensetzung weiterhin mindestens ein Additiv umfasst, das aus der Gruppe bestehend aus Farbstoffen, Geruchsstoffen, Weichmachern, Haftvermittlern, Wash-Off reduzierende Agenzien, Fermentationsschutzmitteln, Tensiden, Mitteln zur Filterung von Sonnenstrahlung und Mischungen davon ausgewählt ist.

4. Verwendung nach einem der vorhergehenden Ansprüche, **dadurch gekennzeichnet, dass** die wässrige Zusammensetzung mindestens einen Zusatzstoff enthält, der aus der Gruppe bestehend aus Triacetin, Triethylcitrat, Schellack und Mischungen davon ausgewählt ist.

5. Verwendung nach einem der vorhergehenden Ansprüche, wobei die wässrige Zusammensetzung auf den oberirdischen Teil der Pflanzen in einer Menge zwischen 30 und 5.000 l/ha, vorzugsweise zwischen 50 und 3.000 l/ha gesprüht oder aufgebracht wird.

6. Verwendung nach Anspruch 5, wobei die wässrige Zusammensetzung auf den oberirdischen Teil der Pflanzen in Behandlungszyklen gesprüht oder aufgebracht wird, in Zyklen umfassend etwa 1-10, vorzugsweise 1-5 aufeinanderfolgende Behandlungen, in einem Abstand von etwa 3-21 Tagen, vorzugsweise etwa 3-10 Tagen, zwischen aufeinanderfolgenden Behandlungen,

7. Verwendung nach einem der vorhergehenden Ansprüche, wobei die phytophagen Insekten mindestens einer Ordnung angehören, die aus der Gruppe bestehend aus Rhyncota, Lepidoptera und Coleoptera ausgewählt ist.

8. Verwendung nach einem der vorhergehenden Ansprüche, wobei die phytophagen Insekten zu mindestens einer Familie oder Oberfamilie gehören, die ausgewählt ist aus der Gruppe bestehend aus Aphidoidea, Coccoidea, Aleyrodidae, Psylloidea, Tortricidae und Chrysomelidae.

9. Verwendung nach einem der vorhergehenden Ansprüche, wobei die phytophagen Milben zur Familie der Tetranychidae, vorzugsweise der Art Tetranychus urticae, gehören.

10. Verfahren zur Bekämpfung des Befalls durch und/oder der Ausbreitung von phytophagen Insekten und/oder Milben, umfassend:
(0) gegebenenfalls das Verdünnen einer konzentrierten Mischung, die eine Menge von mehr als 5 Vol.-% mindestens eines Polyethylenglykols nach Anspruch 1 oder 2 enthält, und
(i) Besprühen oder Aufbringen auf den oberirdischen Teil mindestens einer Pflanze von 30-5.000 l/ha, vorzugsweise 50 - 3.000 l/ha, einer wässrigen Zusammensetzung, wie in einem der Ansprüche 1-4 beschrieben, wobei das mindestens eine Polyethylenglykol, das in der Zusammensetzung enthalten ist, der Wirkstoff zur Bekämpfung des Befalls und/oder der Ausbreitung von phytophagen Insekten und/oder Milben auf Pflanzen ist.

## Revendications

1. Utilisation d'une composition aqueuse comprenant de 0,01 à 5 % en volume, de préférence de 0,01 à 2 % en volume, plus préférablement de 0,02 à 1 % en volume, d'au moins un polyéthylène glycol ayant un poids moléculaire de 300 à 20 000 Da, de préférence de 300 à 8000 Da, dans laquelle ledit au moins un polyéthylène glycol est utilisé comme principe actif insecticide et/ou acaricide, pour lutter contre l'infestation par et/ou la propagation d'insectes et/ou d'acariens phytophages sur les plantes.

2. Utilisation selon la revendication 1, dans laquelle l'au moins un polyéthylène glycol est le seul principe actif ayant une action insecticide et/ou acaricide compris dans la composition, de préférence l'au moins un polyéthylène glycol est le seul principe actif biocide compris dans la composition.

3. Utilisation selon l'une quelconque des revendications précédentes, dans laquelle la composition aqueuse comprend en outre au moins un additif choisi dans le groupe constitué par les colorants, les traceurs olfactifs, les plastifiants, les agents collants, les réducteurs de lavage, les agents anti-fermentation, les tensioactifs, les agents filtrant le rayonnement solaire et des mélanges de ceux-ci.

4. Utilisation selon l'une quelconque des revendications précédentes, dans laquelle la composition aqueuse comprend au moins un additif choisi dans le groupe constitué par la triacétine, le citrate de triéthyle, la gomme-laque et des mélanges de ceux-ci.

5. Utilisation selon l'une quelconque des revendications précédentes, dans laquelle la composition aqueuse est pulvérisée ou déposée sur la partie aérienne des plantes en une quantité comprise entre 30 et 5 000 l/ha, de préférence entre 50 et 3 000 l/ha.

6. Utilisation selon la revendication 5, dans laquelle la composition aqueuse est pulvérisée ou déposée sur la partie aérienne des plantes selon des cycles comprenant environ 1 à 10 traitements consécutifs, de préférence 1 à 5, avec un intervalle d'environ 3 à 21 jours, de préférence d'environ 3 à 10 jours, entre les traitements consécutifs.

7. Utilisation selon l'une quelconque des revendications précédentes, dans laquelle les insectes phytophages appartiennent à au moins un ordre choisi dans le groupe constitué par les hémiptères, les lépidoptères et les coléoptères.

8. Utilisation selon l'une quelconque des revendications précédentes, dans laquelle les insectes phytophages appartiennent à au moins une famille ou superfamille choisie dans le groupe constitué par les Aphidoidea, les Coccoidea, les Aleyrodidae, les Psylloidea, les Tortricidae et les Chrysomelidae.

9. Utilisation selon l'une quelconque des revendications précédentes, dans laquelle les acariens phytophages appartiennent à la famille des Tetranychidae, de préférence l'espèce Tetranychus urticae.

10. Procédé pour lutter contre l'infestation par et/ou la propagation d'insectes et/ou d'acariens phytophages comprenant :
(0) éventuellement, la dilution d'un mélange concentré comprenant une quantité supérieure à 5 % en volume d'au moins un polyéthylène glycol tel que décrit dans la revendication 1 ou 2 ; et
(i) la pulvérisation ou le dépôt sur la partie aérienne d'au moins une plante de 30 à 5 000 l/ha, de préférence de 50 à 3 000 l/ha, d'une composition aqueuse telle que décrite dans l'une quelconque des revendications 1 à 4, dans lequel ledit au moins un polyéthylène glycol compris dans ladite composition est le principe actif pour lutter contre l'infestation par et/ou la propagation d'insectes et/ou d'acariens phytophages sur les plantes.
